(19) **Europäisches Patentamt**
**European Patent Office**
**Office européen des brevets**

(11) **EP 3 447 522 B1**

(12) **EUROPEAN PATENT SPECIFICATION**

(45) Date of publication and mention
of the grant of the patent:
**22.04.2026 Bulletin 2026/17**

(21) Application number: **18187977.6**

(22) Date of filing: **08.08.2018**

(51) International Patent Classification (IPC):
**G01S 17/88** (2006.01)    **G01S 13/86** (2006.01)
**G01S 13/87** (2006.01)    **G01S 13/88** (2006.01)
**G01S 17/42** (2006.01)    **G01S 17/89** (2020.01)
**G01S 17/93** (2020.01)    **G01S 7/486** (2020.01)
**G01S 7/48** (2006.01)    **G01S 7/481** (2006.01)
**G01S 5/16** (2006.01)    **G01S 7/4865** (2020.01)
**G04F 10/00** (2006.01)

(52) Cooperative Patent Classification (CPC):
**G01S 7/481; G01S 7/4808; G01S 7/4811;**
**G01S 7/4817; G01S 7/4865; G01S 17/42;**
**G01S 17/89; G01S 17/93;** G04F 10/005

(54) **DISTANCE MEASURING APPARATUS, SIGNAL DISCRIMINATOR, AND MOVING OBJECT**

DISTANZMESSVORRICHTUNG, SIGNALDISKRIMINATOR UND SICH BEWEGENDES OBJEKT

APPAREIL DE MESURE DE DISTANCE, DISCRIMINATEUR DE SIGNAL ET OBJET MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.08.2017 KR 20170105671
20.09.2017 KR 20170121401
21.09.2017 KR 20170121828
02.11.2017 KR 20170145577**

(43) Date of publication of application:
**27.02.2019 Bulletin 2019/09**

(73) Proprietor: **Yujin Robot Co., Ltd.
Incheon, 22013 (KR)**

(72) Inventors:
• **SHIN, Kyung Chul**
**03010 Seoul (KR)**
• **PARK, Seong Ju**
**15820 Gyeonggi-do (KR)**
• **LEE, Jae Young**
**Gyeonggi-do, 15804 (KR)**
• **CHEON, Moo Woong**
**13903 Gyeonggi-do (KR)**

(74) Representative: **Pace Napoleone, Maria et al
De Simone & Partners S.r.l.
Via Giulio Caccini, 1
00198 Roma (IT)**

(56) References cited:
CN-A- 101 856 208    US-A1- 2014 111 812
US-A1- 2018 149 753

## Description

### TECHNICAL FIELD

The present disclosure relates to a distance measuring apparatus which measures a distance by calculating a flight time, a signal discriminator, and a moving object.

### BACKGROUND ART

The contents described in this section merely provide background information on the present exemplary embodiment but do not constitute the related art.

A light detection and ranging (LIDAR) is a device which transmits a laser signal, measures a returning time of a reflected signal, and measures a distance to a reflector using a speed of light. The laser signal is converted into an electrical signal by a photo diode.

The electrical signal output from the photo diode includes a noise in accordance with a circuit characteristic of the photo diode, magnitudes of the electrical signal are variety, and a signal output time is not uniform.

There is a problem in that the radar needs to wait until a photo carrier of the photo diode dissipates even after the reflected laser signal passes through the photo diode. A considerable time is required until the electrical signal output from the photo diode dissipates. Specifically, as the magnitude of the output signal is increased, it takes more time until the signal dissipates.

As a method of calculating a peak timing of the reflected signal in the LIDAR, there is a method of converting a signal to detect zero. However, actually, the reflected signal includes a noise, so that a timing when the magnitude of the signal becomes zero cannot be used as a target timing. A zero crossing detector needs to be additionally implemented.

As a method of calculating a timing of the reflected signal in the LIDAR, one threshold value may be used. However, according to this method, the signal has different shapes in accordance with an amount of reflected light so that it is difficult to calculate an exact timing. That is, a walk error may be incurred.

Even though as a method of calculating a timing of the reflected signal in the LIDAR, there is a method using a plurality of threshold values. However, since the method provides a feedback of the output signal and delays the signal, circuit complexity is increased.

CN 101 856 208 A discloses a self-propelled home appliance having a sensor-type obstacle recognition device based on an optical measurement method. A light emitting unit and a light receiving unit are provided on the top cover side of the appliance so as to be rotatable about the vertical axis.

US 2014/0 111 812 A1 discloses a 3D scanning system for a vehicle emitting a line-shaped pulsed laser light with horizontal rotation, detecting a light reflected from a target, and generating a 3D image through point cloud data obtained by calculating the distance to the target.

### SUMMARY OF THE INVENTION

An object to be achieved by the present disclosure is to receive reflected light to convert the received reflected light into an electrical signal and output the electrical signal during a detecting time of a sampling period so that there is no need to wait until the output signal dissipates and irregular signal processing times become uniform to stabilize an operation of the system and a processing speed of a system is improved.

Another object to be achieved by the present disclosure is to convert an electrical signal such that a signal point having a maximum signal magnitude in the electrical signal has a predetermined magnitude, adjust a magnitude of the converted electrical signal, and detect a timing having a predetermined magnitude to improve a walk error and measure an exact timing only by a comparator.

Still another object to be achieved by the present disclosure is to correct a flight time using a pulse width of a reflected signal to calculate an exact flight time.

Other and further objects of the present disclosure which are not specifically described can be further considered within the scope easily deduced from the following detailed description and the effect.

At least some of these objects are achieved by a signal discriminator according to independent claim 1, by a distance measuring apparatus according to independent claim 4, and by a moving object according to independent claim 12. Preferred embodiments thereof are defined in the respective dependent claims.

According to a most general aspect, a distance measuring apparatus includes an optical transceiver which emits light to a target by a start control signal, receives the light reflected from the target to convert the light into an electrical signal, and outputs the electrical signal during a predetermined detection time, a signal discriminator which converts the electrical signal to generate a stop control signal, and a distance measuring unit which calculates a flight time based on a time difference between the start control signal and the stop control signal to measure a distance.

According to another aspect of the present exemplary embodiment, the optical transceiver includes a light source which emits light based on a predetermined sampling period, a photo diode which receives light reflected from the target to convert the light into an electrical signal, and a signal converter which outputs the electrical signal during the detecting time of the sampling period.

According to another most general aspect of the present exemplary embodiment, a moving object includes a distance measuring apparatus which calculates a flight time between a moving object and a target to measure a distance to the target; and a moving device which is implemented to move the moving object based on the distance to the target and the distance measuring apparatus includes an optical transceiver which emits light to a target by a start control signal, receives the light reflected from the target to convert the light into an electrical signal, and outputs the electrical signal during a predetermined detection time; a signal discriminator which converts the electrical signal to generate a stop control signal, and a distance measuring unit which calculates a flight time based on a time difference between the start control signal and the stop control signal to measure a distance.

According to another most general aspect of the present exemplary embodiment, a distance measuring apparatus includes an optical transceiver which emits light to a target by a start control signal and receives light reflected from the target to convert the reflected light into an electrical signal; a signal discriminator which converts the electrical signal and detects a timing having a predetermined reference magnitude to generate a stop control signal; and a distance measuring unit which calculates a flight time based on a time difference between the start control signal and the stop control signal to measure a distance.

According to another most general aspect of the present exemplary embodiment, a signal discriminator includes a first converter which converts a shape of the electrical signal which rises or falls such that a signal timing having a maximum signal magnitude has a predetermined magnitude, a second converter which adjusts a magnitude of the converted input signal; and a signal detector which detects at least one timing having the predetermined reference magnitude from the input signal with an adjusted magnitude to generate an output signal.

According to another most general aspect of the present exemplary embodiment, a moving object includes a distance measuring apparatus which calculates a flight time between a moving object and a target to measure a distance to the target; and a moving device which is implemented to move the moving object based on the distance to the target and the distance measuring apparatus includes an optical transceiver which emits light to a target by a start control signal and receives light reflected from the target to convert the reflected light into an electrical signal, a signal discriminator which converts the electrical signal and detects a timing having a predetermined reference magnitude to generate a stop control signal; and a distance measuring unit which calculates a flight time based on a time difference between the start control signal and the stop control signal to measure a distance.

The optical transceiver may output the electrical signal during a predetermined detecting time and the signal discriminator may convert the output electrical signal.

The optical transceiver may include a light source which emits light based on a predetermined sampling period, a photo diode which receives light reflected from the target to convert the light into an electrical signal, and a signal converter which outputs the electrical signal during the detecting time of the sampling period.

The signal converter may include a resistor having one end connected to the photo diode and the other end connected to the ground, a capacitor which is connected at a point where the photo diode and the resistor are connected to output the electrical signal, and a switch which is connected to the resistor in parallel to change a transmission path of the electrical signal.

The switch may (i) transmit the electrical signal to a first path during the detecting time of the sampling period and (ii) transmit the electrical signal to a second path during a cut-off time of the sampling period to remove a part of an area where the magnitude of the electrical signal is reduced.

The distance measuring apparatus may adjust the sampling period and set the detecting time in accordance with the sampling period to control an on/off operation of the switch.

According to the invention, the first converter differentiates the input signal or converts the input signal using a constant fraction discriminator (CFD).

The second converter may amplify a magnitude of the converted input signal N times (N is a real number larger than 1).

The signal detector may output a rising edge and a falling edge with respect to one threshold value from the input signal with an adjusted magnitude.

The distance measuring unit may correct the flight time using a pulse width of the stop control signal.

The distance measuring unit may apply a correction factor which is inversely proportion to the pulse width to correct the flight time.

As described above, according to the exemplary embodiments of the present disclosure, it is possible to receive reflected light to convert the received reflected light into an electrical signal and output the electrical signal during a detecting time of a sampling period so that there is no need to wait until the output signal dissipates and irregular signal processing times become uniform to stabilize an operation of the system and a processing speed of a system is improved.

According to the exemplary embodiments of the present disclosure, it is possible to convert an electrical signal such that a signal point having a maximum signal magnitude in the electrical signal has a predetermined magnitude, adjust a magnitude of the converted electrical signal, and detect a timing having a predetermined magnitude to improve a walk error and measure an exact timing only by a comparator.

According to the exemplary embodiments of the present disclosure, it is possible to correct a flight time using a pulse width of a reflected signal to calculate an exact flight time.

Even if the effects are not explicitly mentioned here, the effects described in the following specification which are expected by the technical features of the present disclosure and their potential effects are handled as described in the specification of the present disclosure.

## BRIEF DESCRIPTION OF THE DRAWINGS

FIGS. 1 to 3 are views illustrating a moving object according to an exemplary embodiment of the present disclosure;
FIGS. 4 and 5 are block diagrams illustrating a distance measuring apparatus according to another exemplary embodiment of the present disclosure;
FIG. 6 is a view illustrating an electrical signal output from a photo diode;
FIGS. 7 and 8 are block diagrams illustrating an optical transceiver of a distance measuring apparatus according to another exemplary embodiment of the present disclosure;
FIG. 9 is a circuit diagram illustrating an optical transceiver according to another exemplary embodiment of the present disclosure;
FIG. 10 is a view illustrating a signal output from an optical transceiver according to another exemplary embodiment of the present disclosure;
FIG. 11 is a view illustrating a reflected signal received by a distance measuring apparatus;
FIG. 12 is a block diagram of a signal discriminator according to another embodiment of the present disclosure;
FIG. 13 is a view illustrating a signal input to a signal discriminator according to another exemplary embodiment of the present disclosure;
FIG. 14 is a view illustrating a signal converted by a signal discriminator according to another exemplary embodiment of the present disclosure;
FIG. 15 is a view illustrating a signal having a magnitude amplified by a signal discriminator according to another exemplary embodiment of the present disclosure;
FIG. 16 is a circuit diagram illustrating a time to digital converter of the related art;
FIG. 17 is a view illustrating a signal of a time to digital converter of the related art;
FIG. 18 is a view for explaining an operation of measuring a time by a time to digital converter according to another exemplary embodiment of the present disclosure;
FIG. 19 is a block diagram illustrating a time to digital converter according to another exemplary embodiment of the present disclosure;
FIG. 20 is a block diagram illustrating a ring oscillator of a time to digital converter according to another exemplary embodiment of the present disclosure;
FIG. 21 is a block diagram illustrating a time to digital converter according to another exemplary embodiment of the present disclosure;
FIG. 22 is a view illustrating that a time to digital converter according to another exemplary embodiment of the present disclosure is exemplarily implemented in an FPGA;
FIG. 23 is a block diagram illustrating a distance measuring apparatus according to another exemplary embodiment of the present disclosure; and
FIG. 24 is a view for explaining an operation of correcting a time by a distance measuring apparatus according to another exemplary embodiment of the present disclosure.

## DETAILED DESCRIPTION

Hereinafter, in the description of the present disclosure, a detailed description of the related known functions will be omitted if it is determined that the gist of the present disclosure may be unnecessarily blurred as it is obvious to those skilled in the art and some exemplary embodiments of the present disclosure will be described in detail with reference to exemplary drawings.

The LIDAR sensor according to the present exemplary embodiment may be applied to a distance measuring apparatus or a moving object. That is, the LIDAR sensor may be applied to products which require distance measurement, such as small appliances or a moving object such as drones or vehicles. The LIDAR sensor is a device which transmits a laser signal, measures a returning time of the reflected signal, and measures a distance to a reflector using a speed of light. The laser signal is converted into an electrical signal by a photo diode. The laser signal may have a predetermined wavelength band. For example, the laser signal may use an infrared wavelength band. The LIDAR sensor may be referred to as an optical transceiver.

<Moving object>

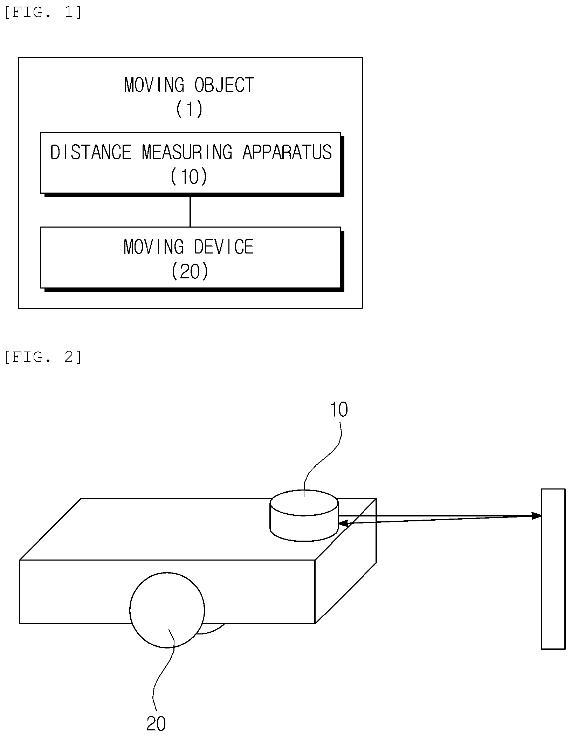

FIGS. 1 to 3 are views illustrating a moving object according to an exemplary embodiment of the present disclosure.

As illustrated in FIG. 1, a moving object 1 includes a distance measuring apparatus 10 and a moving device 20. The moving object 1 may omit some components among various components which are exemplarily illustrated in FIG. 1 or may further include other component. For example, the moving object may further include a cleaning unit.

The moving object 1 refers to a device designed to be movable from a specific location to another location according to a predetermined method and moves from the specific location to another location using a moving unit such as wheels, rails, or walking legs. The moving object 1 may collect external information using a sensor and then move according to the collected information or move using a separate manipulating unit by a user.

Examples of the moving object 1 include robot cleaners, toy cars, mobile robots for industrial or military purposes. The moving object 1 may travel using wheels or walk using one or more legs, or may be implemented by a combination thereof.

The robot cleaner is a device which sucks foreign matters such as dust accumulated on a floor while traveling a cleaning space to automatically clean the cleaning space. Differently from a normal cleaner which moves by an external force provided by a user, the robot cleaner moves using external information or a predetermined moving pattern to clean the cleaning space.

The robot cleaner may automatically move using a predetermined pattern or detect an external obstacles using a detecting sensor and then moves as it is detected. Further, the robot cleaner may move in accordance with a signal transmitted from a remote control device which is manipulated by the user.

The detecting sensor may be implemented by LIDAR. The LIDAR is a device which transmits a laser signal, measures a returning time of the reflected signal, and measures a distance to a reflector using a speed of light. The laser signal is converted into an electrical signal by a photo diode. The laser signal may have a predetermined wavelength band.

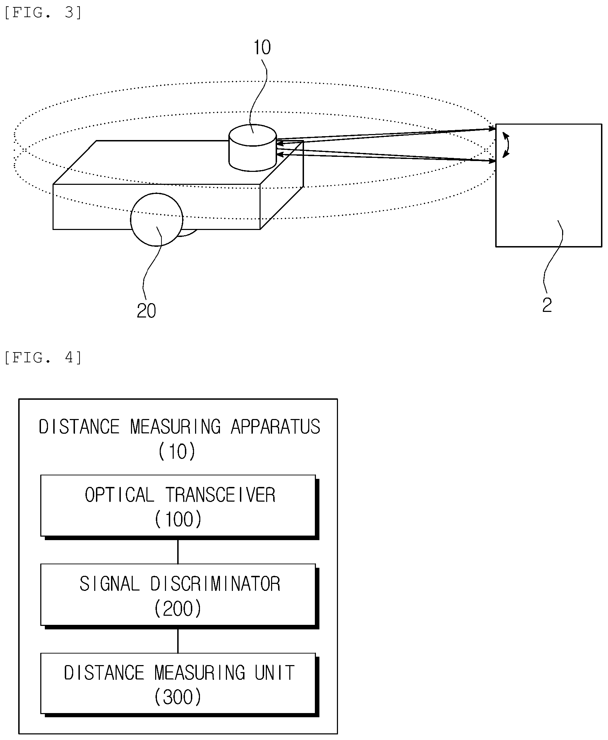

Referring to FIGS. 2 and 3, even though the distance measuring apparatus 10 which calculates a flight time between a moving object and a target to measure a distance to the target is located at an upper edge of the main body, it is merely illustrative and the present disclosure is not limited thereto. Further, one or more distance measuring apparatuses may be implemented in an appropriate location in accordance with an implemented design. The distance measuring apparatus 10 transmits and receives light using a pair of light sources and a photo diode and three-dimensionally scans surroundings using a movable mirror and a rotor.

The distance measuring apparatus 10 may operate by a time of flight (TOF) manner. According to the time of flight manner, a laser emits a pulsed or square wave signal to measure a time when a reflection pulse or square wave signals from objects within a measurement range reach a receiver to measure a distance between an object to be measured and the distance measuring apparatus.

The moving device 20 calculates a driving path based on a distance to the target or detects an obstacle to move the moving object. The moving device 20 may move the moving object based on a relative location of an artificial mark. The moving device 20 may be implemented by a moving unit such as wheels, rails, or walking legs.

<Distance measuring apparatus>

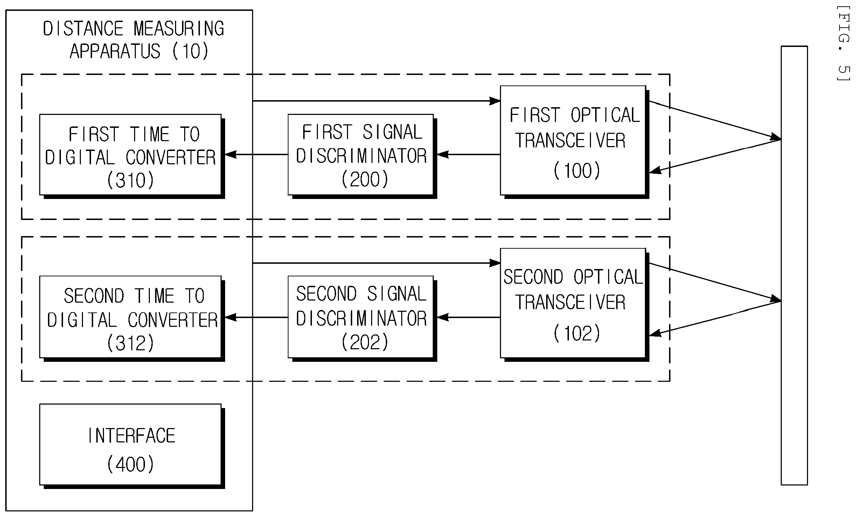

FIGS. 4 and 5 are views of a distance measuring apparatus according to exemplary embodiments of the present disclosure. The distance measuring apparatus is implemented in the moving object or independently operates. As illustrated in FIG. 4, the distance measuring apparatus 10 includes an optical transceiver 100, a signal discriminator 200, and a distance measuring unit 300. The distance measuring apparatus 10 may omit some components among various components which are exemplarily illustrated in FIG. 4 or may further include other component. For example, the distance measuring apparatus 10 may further include an interface 400.

The optical transceiver 100 transmits a laser signal and receives a reflected signal. The optical transceiver 100 emits light to a target by a start control signal and receives light which is reflected from the target to convert the light into an electrical signal. The optical transceiver 100 outputs the electrical signal during a predetermined detecting time.

The optical transceiver 100 converts light into a current or a voltage a circuit for buffering and scaling an output of the photo diode is necessary. For example, a trans impedance amplifier (TIA) may be connected to the photo diode. The trans impedance amplifier amplifies a current of the photo diode and converts the current into the voltage to output the voltage. The trans impedance amplifier may be classified into a resistive feedback TIA (R-TIA) and a capacitive feedback TIA (C-TIA).

The optical transceiver 100 may include a signal converter. The signal converter is connected to the photo diode of the optical transceiver 100 and the trans impedance amplifier is connected to the signal converter.

The light source emits light to the target based on a predetermined sampling period. The sampling period may be set by a controller of the distance measuring apparatus 10. The sampling period is a time when the optical transceiver 100 emits light and receives reflected light, and converts the light into an electrical signal in accordance with the start control signal. The optical transceiver 100 may repeatedly perform this operation in a next sampling period. The photo diode receives light reflected from the target to convert the light into an electrical signal. The photo diode may be implemented by a PN junction photo diode, a PIN photo diode, or an avalanche photo diode (APD). The photo diode outputs the electrical signal until the photo carrier dissipates. Further, as the magnitude of the output signal is increased, it takes more time until the signal dissipates.

The signal discriminator 200 converts the electrical signal to measure an exact timing and output a control signal. The signal discriminator 200 converts the electrical signal such that a signal point having a maximum signal magnitude has a predetermined magnitude, adjusts an magnitude of the converted electrical signal, and detects a timing having the predetermined magnitude. The signal discriminator converts the electrical signal to generate a stop control signal.

The signal discriminator 200 receives the electrical signal from the photo diode or the trans impedance amplifier. The received electrical signal, that is, an input signal rises or falls by the reflected light. The signal discriminator exactly measures a target timing for the input signal to output the electrical signal.

The signal discriminator 200 differentiates the input signal or converts the input signal using a constant fraction discriminator (CFD). The constant fraction discriminator is a method which finds a timing when a timing when a signal obtained by delaying an original signal is equal to a signal adjusted by a predetermined magnitude ratio becomes a predetermined ratio of the maximum magnitude.

The signal discriminator 200 converts a slope of the input signal so that a signal point having the maximum signal magnitude has a predetermined magnitude. The signal discriminator 200 adjusts a magnitude of the converted input signal. The signal discriminator amplifies the magnitude of the converted input signal n times (N is a real number larger than 1). The signal discriminator performs a plurality of amplifying processes to convert the slope of the signal to be close to the vertical. Since the slope is large, even though the circuit is simply implemented only by the comparator, an exact timing may be obtained.

The distance measuring unit 300 measures a time and a distance by the time of flight manner. The distance measuring unit 300 calculates a flight time based on a time difference between the start control signal and the stop control signal to measure the distance. The distance measuring unit 300 calculates a distance from the time using the speed of light.

The distance measuring unit 300 may include one or more time to digital converters 310 and 31 which convert the difference of two hours into the digital value. The input signal of the time to digital converter may be a pulse shape of the same signal source or may be an edge of other signal source. For example, the distance measuring apparatus 10 may calculate the time difference based on a rising edge or a falling edge of the start control signal and a rising edge or a falling edge of the stop control signal.

The interface 400 is a communication path which transmits and receives information to and from other device (or a host). The other device accesses the distance measuring apparatus 10 through an interface to set a parameter. The distance measuring apparatus 10 may transmit the time and the distance measured through the interface to other device.

<Signal converter of optical transceiver>

The electrical signal output from the photo diode includes a noise in accordance which a circuit characteristic of the photo diode, magnitudes of the electrical signal are variety, and a signal output time is not uniform.

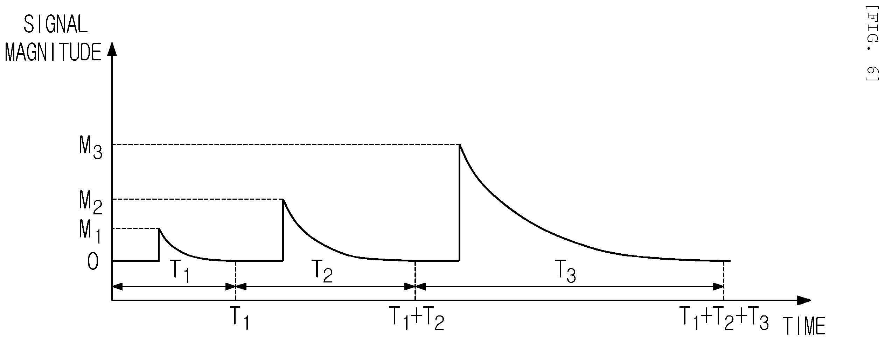

There is a problem in that the radar needs to be wait until a photo carrier of the photo diode dissipates even after the reflected laser signal passes through the photo diode. FIG. 6 illustrates an electrical signal output from the photo diode. As illustrated in FIG. 6, it takes considerable time until the electrical signal output from the photo diode dissipates. Specifically, as the magnitude of the output signal is increased, it takes more time until the signal dissipates.

The optical transceiver 100 may be implemented in the moving object or the distance measuring apparatus or independently operate.

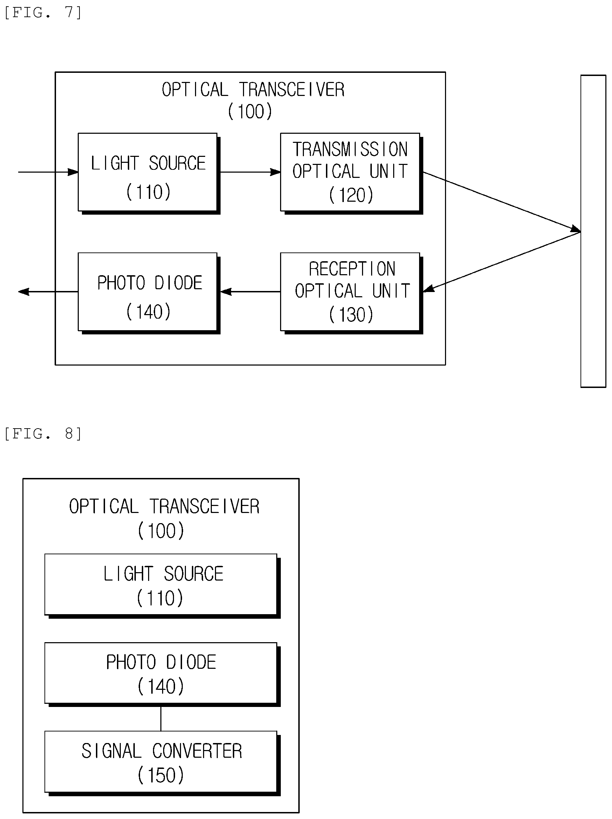

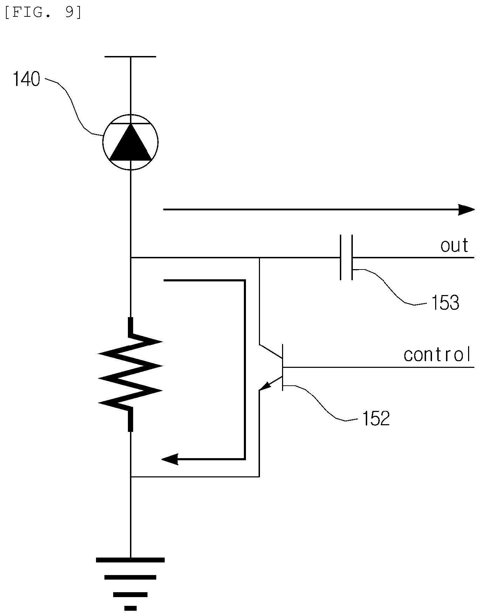

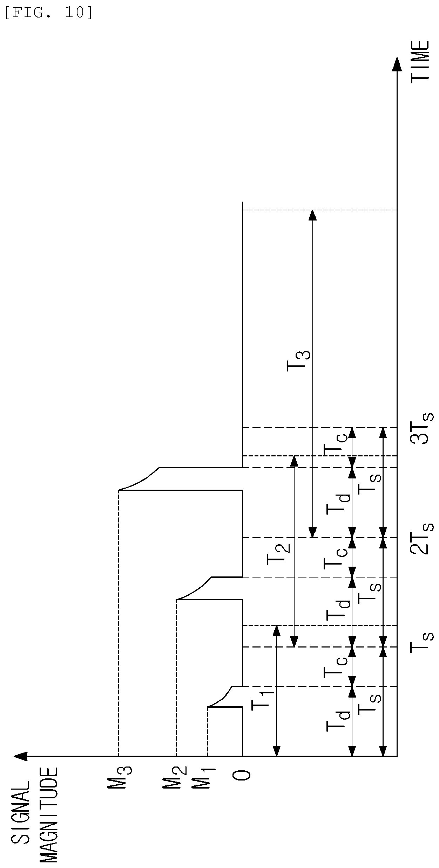

FIGS. 7 and 8 are block diagrams illustrating an optical transceiver, FIG. 9 is a circuit diagram illustrating an optical transceiver, and FIG. 10 is a view illustrating a signal output from the optical transceiver.

The optical transceiver 100 may include a transmission optical unit 120 and a reception optical unit 130. The transmission optical unit and the reception optical unit are paths of the laser signal and may be formed to have a body tube structure or may be a mirror. The optical transceiver 100 may simultaneously detect obstacles in the horizontal direction and a ground direction by setting angles of the plurality of mirrors to be different from each other. The obstacle may be detected in all directions by rotating the transmission optical unit and the reception optical unit. For example, the scan line may be set to be 45 degrees and 60 degrees and two or more scan lines may be configured. The optical transceiver 100 may include a rotating unit. The optical transceiver 100 performs horizontal scanning through the rotating unit.

As illustrated in FIG. 8, the optical transceiver 100 includes a light source 110, a photo diode 140, and a signal converter 150. The light transceiver 100 may omit some components among various components which are exemplarily illustrated in FIG. 8 or may further include other component. For example, the trans impedance amplifier may be connected to the signal converter 150.

The light source 110 emits light to the target based on a predetermined sampling period. The sampling period may be set by a controller of the distance measuring apparatus 10. The sampling period is a time when the optical transceiver 100 emits light and receives reflected light, and converts the light into an electrical signal in accordance with the start control signal. The optical transceiver 100 may repeatedly perform this operation in a next sampling period.

The photo diode 140 receives light reflected from the target to convert the light into an electrical signal. The photo diode 140 may be implemented by a PN junction photo diode, PIN photo diode, or an avalanche photo diode (APD). As illustrated in FIG. 6, the photo diode 140 outputs an electrical signal until photo carries dissipate. Further, as the magnitude of the output signal is increased, it takes more time until the signal dissipates.

The signal converter 150 outputs the electrical signal during a detecting time of the sampling period so as not to be limited to the dissipation time of the output signal. Referring to FIG. 9, the signal converter 150 may include a resistor 151, a switch 152, and a capacitor 153. The resistor 151 is connected to the photo diode 140. One end of the resistor 151 is connected to the photo diode 140 and the other end of the resistor 151 is connected to the ground. The resistor 151 may be connected to an anode or a cathode of the photo diode 140.

When a resistance value is small, a waveform has a value which is not zero during a time similar to a time when the light passes through the photo diode 140, but there is a problem in that a magnitude of the output signal is small. Therefore, it is necessary to amplify a magnitude of the electrical signal using a resistor 15 having a value which is larger than a predetermined value. In this case, as illustrated in FIG. 1, a signal trailing phenomenon occurs.

In order to solve the signal trailing phenomenon, a transmission path of the electrical signal is changed through the switch 152. The optical transceiver 100 may output a signal from which a part of an area where the magnitude of the electrical signal is reduced is removed. Even though a rear end of the electrical signal is removed, the distance measuring apparatus 10 may measure a distance. This is because the signal discriminator 200 does not detect the ending point of the electrical signal, but detects a start timing and a maximum magnitude timing of the electrical signal to output a rising edge and a falling edge.

The switch 152 is connected to the resistor 151 in parallel to change the transmission path of the electrical signal. For example, the switch 152 may be implemented by a transistor.

Referring to FIG. 9, the switch 152 transmits the electrical signal to a first path during a detecting time Td of the sampling period Ts and transmits the electrical signal to a second path during a cut-off time Tc of the sampling period Ts. The first path is a path where the signal is transmitted through the capacitor 153 and the second path is a path where the signal is transmitted to the ground through the switch 152.

According to the exemplary embodiments, even though signal dissipation times T1, T2, and T3 are taken for the electrical signal output from the photo diode 140 due to the trailing phenomenon, the signal may be processed in accordance with the sampling period without waiting until the signal dissipates.

The distance measuring apparatus 10 adjusts the sampling period, calculates and sets an appropriate detecting time in accordance with the sampling period, and control an on/off operation of the switch 152. The controller of the distance measuring apparatus 10 may control an on/off operation of the switch by referring a sampling period, a detecting time, a cut-off time, a waveform of emitted light, an on/off time interval of a light source, a pulse width of a start control signal, a pulse width of a stop control signal, a rotation speed of the optical transceiver, a signal processing and waiting time of the signal discriminator and a time calculator.

The capacitor 153 is connected to a point where the photo diode 140 and the resistor 151 are connected to output an electrical signal. The capacitor 153 removes a DC component of the electrical signal. A non-inverting amplifier may be connected to a rear end of the capacitor 153.

<Signal discriminator>

As a method of calculating a peak time of the reflected signal in the LIDAR, there is a method of converting a signal to detect zero. However, the reflected signal includes a noise, so that a time when the magnitude of the signal becomes zero cannot be used as a target time. A zero crossing detector needs to be additionally implemented.

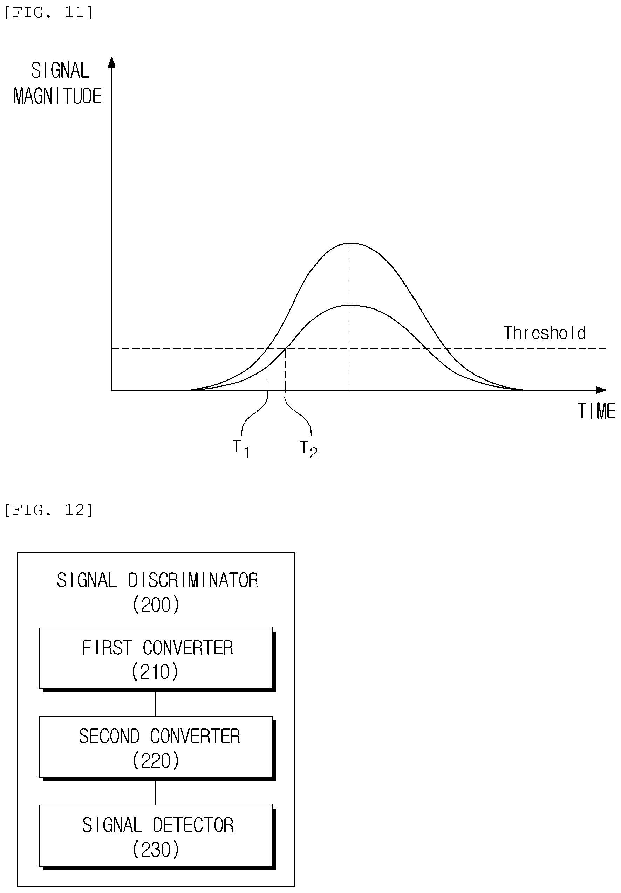

As a method of calculating a timing of the reflected signal in the LIDAR, there is a method using one threshold value. However, according to this method, the signal has different shapes in accordance with an amount of reflected light so that it is difficult to calculate an exact timing. That is, a walk error may be incurred. Referring to FIG. 11, it is easily understood that various timings $T_1$ and $T_2$ are calculated in accordance with shapes of the signal.

Even though as a method of calculating a timing of the reflected signal in the LIDAR, there is a method using a plurality of threshold values, the method provides a feedback of the output signal and delays the signal so that circuit complexity is increased.

FIG. 12 is a block diagram illustrating a signal discriminator.

As illustrated in FIG. 12, the signal discriminator 200 includes a first converter 210, a second converter 220, and a signal detector 230. The signal discriminator 200 may omit some components among various components which are exemplarily illustrated in FIG. 12 or may further include other component.

The signal discriminator 200 receives the electrical signal from the photo diode 140 or the trans impedance amplifier. The received electrical signal, that is, an input signal rises or falls by the reflected light. The signal discriminator 200 exactly measures a target timing for the input signal to output the electrical signal.

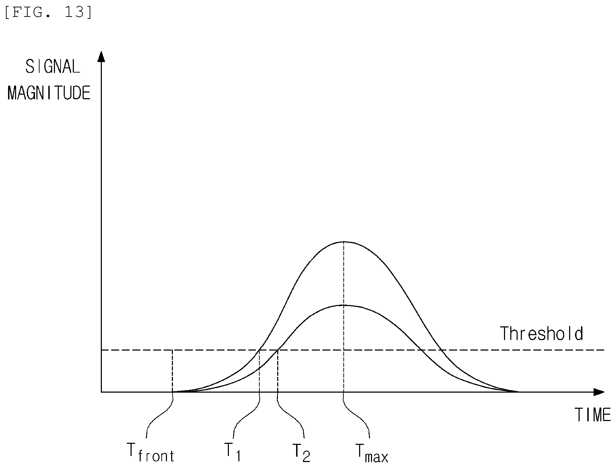

Referring to FIG. 13, the input signal has a front end timing $T_{front}$, target timings $T_1$ and $T_2$ which meet a set threshold value, and a peak timing $T_{max}$ in accordance with the shape of the input signal. The signal discriminator 200 performs two steps of converting process to detect a timing which is the closest to the front end timing $T_{front}$ and the peak timing $T_{max}$.

The first converter 210 converts the input signal so that a signal point having the maximum signal magnitude has a predetermined magnitude. The first converter 210 converts the input signal such that a size of the signal point having the maximum signal magnitude is zero. According to the invention, the first converter 210 differentiates the input signal or converts the input signal using a constant fraction discriminator (CFD). The constant fraction discriminator is a method which finds a timing when a timing when a signal obtained by delaying an original signal is equal to a signal adjusted by a predetermined magnitude ratio becomes a predetermined ratio of the maximum magnitude.

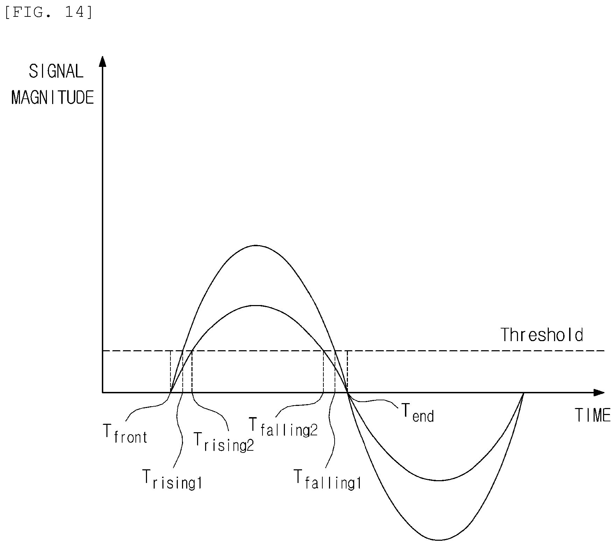

FIG. 14 illustrates a signal obtained by differentiating an input signal with respect to a time. Referring to FIG. 14, the converted signal has a front end timing $T_{front}$, rising timings $T_{rising1}$ and $T_{rising2}$ which meet the set threshold value, falling timings $T_{falling1}$ and $T_{falling2}$ which meet the set threshold value, and a rear end timing Tend. The rear end timing Tend is the same timing as the peak timing $T_{max}$ of the signal before being converted. As illustrated in FIG. 14, when the first converter 210 converts a slope of the input signal such that a signal point having the maximum signal magnitude has a predetermined magnitude, the rising timings $T_{rising1}$ and $T_{rising2}$ are close to the front end timing $T_{front}$ and the falling timings $T_{falling1}$ and $T_{falling2}$ are close to the rear end timing $T_{end}$.

When the signal is differentiated or the constant fraction discriminator is applied to a signal, a zitter is significant and a dynamic range which is a ratio of a maximum signal amplitude and a minimum signal amplitude may be narrow. Since the differential method is implemented by an RC circuit, a frequency characteristic of the signal according to distance change is changed to generate a time error. According to the constant fraction discriminator, slopes of the signal varies so that a charging time of a capacitor of a comparator varies and a response time of the comparator varies, to generate a time error. Therefore, the converted signal needs to be converted again.

The second converter 220 adjusts a magnitude of the converted input signal. The second converter amplifies the magnitude of the converted input signal n times (N is a real number larger than 1). The amplification is repeated N times.

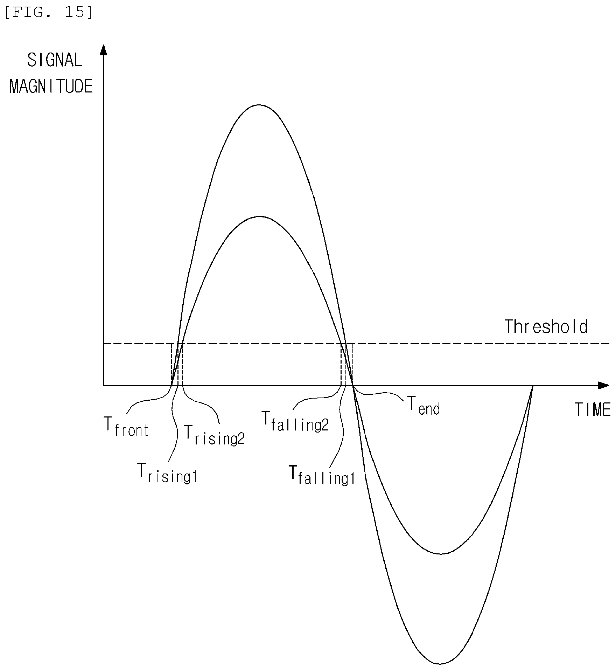

FIG. 15 illustrates a signal obtained by amplifying a magnitude of an input signal whose slope is converted. As illustrated in FIG. 15, when the second converter 220 amplifies a magnitude of a signal whose slope is converted, the slope is close to the vertical, so that the rising timings $T_{rising1}$ and $T_{rising2}$ are close to the front end timing $T_{front}$ and the falling timings $T_{falling1}$ and $T_{falling2}$ are close to the rear end timing $T_{end}$.

According to the exemplary embodiment, even though a circuit which simply compares a signal including a noise with a threshold value, due to two steps of converting process, the front end timing $T_{front}$ and the rear end timing $T_{end}$ may be exactly obtained.

The signal detecting unit 230 detects at least one timing having a predetermined reference magnitude from the input signal with an adjusted magnitude to generate an output signal. The output signal may be a stop control signal. The signal detecting unit 230 outputs a rising edge and a falling edge from the input signal with an adjusted magnitude with respect to one threshold value. The stop control signal may be a pulse matching a rising edge, a pulse matching a falling edge, or a pulse matching both the rising edge and the falling edge.

The distance measuring apparatus 10 corrects the flight time using a pulse width according to the rising edge and the falling edge.

<Time to digital converter>

A method of measuring a flight time includes a phase shifting method, an equivalent time sampling method, a direct measuring method using a high resolution clock, and a time measuring method using a plurality of delay elements. According to the phase shifting method, a transmitting unit consistently transmits a sign wave and a receiving unit measures the flight time using a phase shift. However, the method has a problem in that a sampling rate is restricted according to a period of the sign wave and wrong flight time is calculated due to a cross-talk.

The equivalent time sampling method is applied to an oscilloscope to reconstruct the entire signal by repeatedly reading the signal with a time difference. In this method, the sampling rate is low so that it is restricted to detect an obstacle which moves at a high speed or to be used for a moving object.

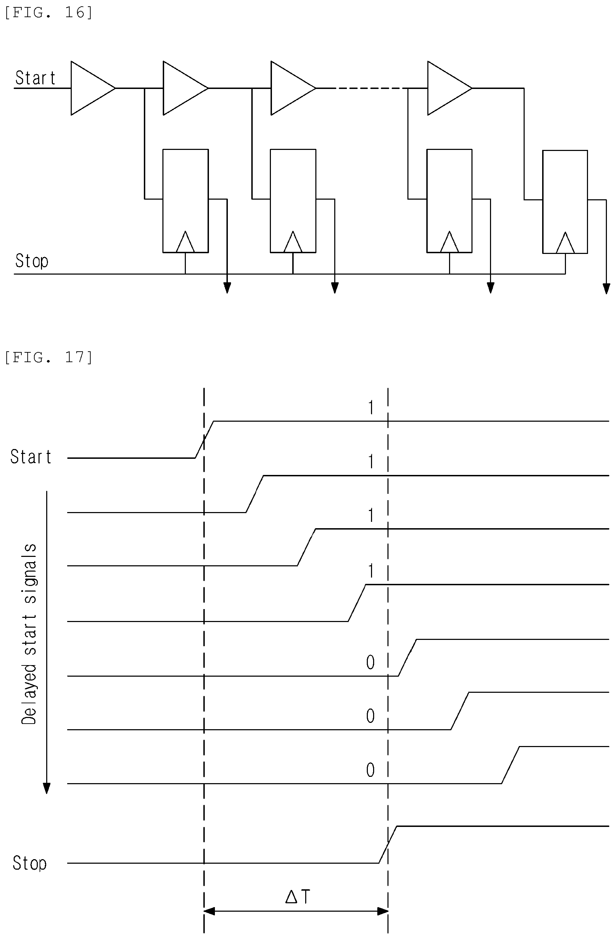

The direct measuring method using a high resolution clock measures a flight time using a clock which operates at several GHz. However, according to this method, the clock speed cannot be physically sufficiently increased, so that there is a limitation in improving a time resolution. According to the time measuring method using a plurality of delay elements, the time difference is calculated using a time to digital converter (TDC). FIG. 16 illustrates a time to digital converter of the related art and FIG. 17 illustrates a signal of a time to digital converter of the related art.

In FIG. 16, a buffer has a time delay of tens to several hundreds of pico seconds (ps). When a flip flop operates using a stop signal, the time delay is equal to the number of flip flops having a value of a logic high 1 in FIG. 17. That is, the sum of delay times has the same value as the flight time. Such a method depends on a time delay through a buffer and cannot have a linear time resolution due to the FPGA characteristic. Further, a large amount of delay lines needs to be sequentially positioned in the FPGA, so that a space for implementing in the FPGA and the number of elements are limited.

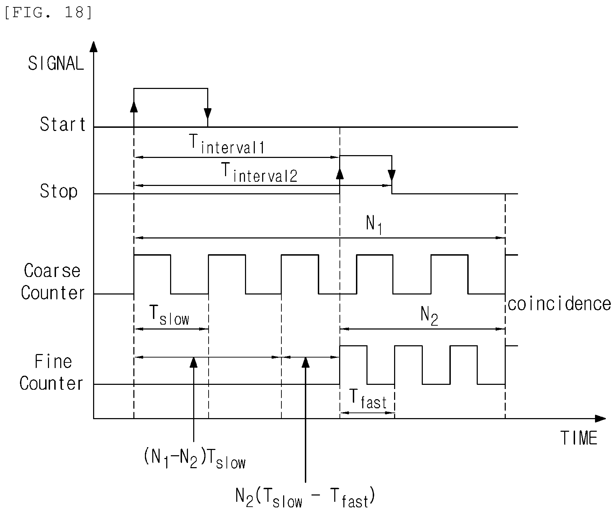

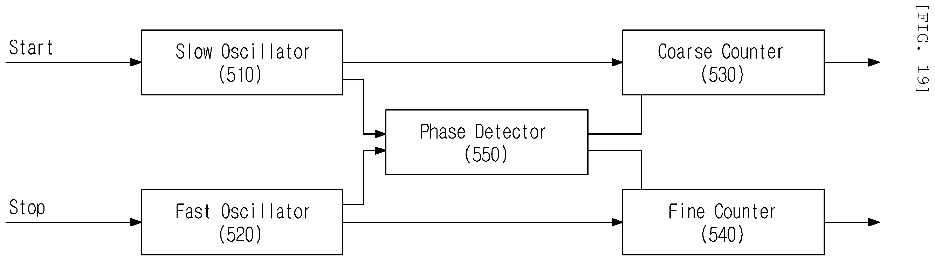

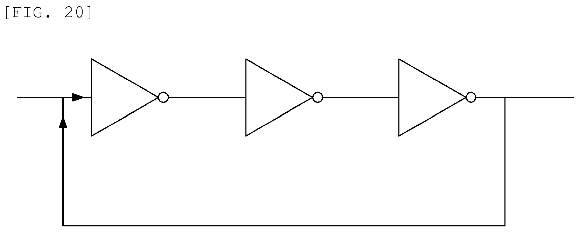

FIG. 18 is a view for explaining an operation of measuring a time by the time to digital converter, FIG. 19 is a block diagram illustrating a time to digital converter, and FIG. 20 is a block diagram illustrating a ring oscillator of a time to digital converter.

The distance measuring unit 300 converts a difference between two times into a digital value using a time to digital converter.

The time to digital converter is a device which coverts time information into a digital code. The time to digital converter generates a digital code corresponding to the time difference between two input signals.

The input signal of the time to digital converter may be a pulse shape of the same signal source or may be an edge of other signal source. For example, the distance measuring apparatus 10 may calculate the time difference based on a rising edge or a falling edge of the start control signal and a rising edge or a falling edge of the stop control signal.

Referring to FIG. 18, the time to digital converter measures a time using (i) numbers $N_1$ and $N_2$ counted by a coarse counter and a fine counter and (ii) a large clock of the coarse counter and a small clock of the fine counter. A time difference between the large clock of the coarse counter and the small clock of the fine counter determines a time resolution of the time to digital converter.

Referring to FIG. 19, the time to digital converter includes a slow oscillator 510, a fast oscillator 520, a coarse counter 530, a fine counter 540, and a phase detector 550.

The slow oscillator 510 generates a first clock by the start control signal. The fast oscillator 520 generates a second clock which is smaller than the first clock, by the stop control signal. That is, the slow oscillator 510 generates a large clock and the fast oscillator 520 generates a small clock.

The coarse counter 530 is connected to the slow oscillator 510 to count the first clock of the slow oscillator 510. The fine counter 540 is connected to the fast oscillator 520 to count the second clock of the fast oscillator 520.

The phase detector 550 is connected to the slow oscillator 510 and the fast oscillator 520 and also connected to the coarse counter 530 and the fine counter 540 to detect a timing where the first clock and the second clock are synchronized.

The slow oscillator 510 and the fast oscillator 520 may be implemented by a ring oscillator. The ring oscillator is an oscillator in which an inverter and/or a buffer are connected in series in the form of a loop cyclic pattern. The slow oscillator 510 and the fast oscillator 520 may be configured by a time delay element and a buffer. The time delay element may be implemented by a digital element using an inverter or an analog element using a current source.

In FIG. 20, a ring oscillator in which three inverters are sequentially connected is illustrated, but it is merely illustrative and the ring oscillator is not limited thereto and a combination of appropriate logical elements may be used depending on a design to be implemented.

The slow oscillator and the fast oscillator of the related art adjust a clock width by adjusting the number of buffers. The time to digital converter of the related art has a resolution of approximately 80 pico seconds (ps) due to a signal delay time of the buffer.

In the present exemplary embodiments, the clock width of the slow oscillator 510 may be adjusted by changing positions and signal paths of logical elements of the slow oscillator 510 on the circuit. Further, the clock width of the fast oscillator 520 may be adjusted by changing positions and signal paths of logical elements of the fast oscillator 520 on the circuit. That is, the slow oscillator 510 is changed to operate faster and the fast oscillator 520 is changed to be slower. A location and a routing path of each gate may be directly adjusted using a manual gate location adjusting function of a FPGA tool. The slow oscillator 510 and the fast oscillator 520 may be combined by the same logical elements.

According to the present exemplary embodiment, the locations of the gates and the routing paths of the signal of the slow oscillator and the fast oscillator are changed on the circuit to improve a difference between the clock width of the slow oscillator and the clock width of the fast oscillator, that is, the time resolution. The time to digital converter according to the exemplary embodiment of the present disclosure has a resolution of approximately 10 pico seconds (ps).

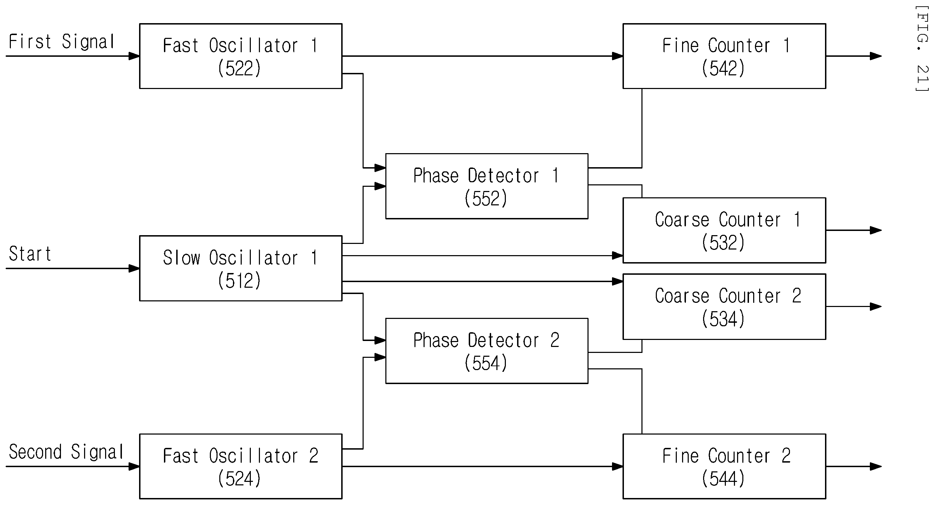

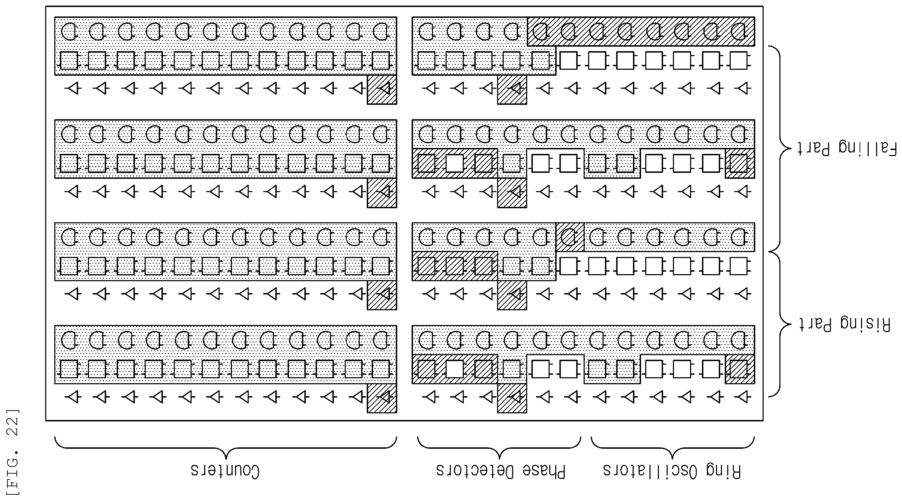

FIG. 21 is a block diagram illustrating a time to digital converter based on two stop control signals and FIG. 22 illustrates that the time to digital converter is exemplarily implemented in the FPGA.

The time discriminator 200 may output a first signal and a second signal. For example, the first signal is a stop control signal according to a rising edge and the second signal is a stop control signal according to a falling edge.

Referring to FIG. 21, the time to digital converter calculates a first time difference based on the start control signal and the first signal. The time to digital converter calculates a second time difference based on the start control signal and the second signal. In the exemplary embodiment, the rising edge and the falling edge are processed together so that the slow oscillator or the fast oscillator may be designed to be shared. That is, the slow oscillator or the fast oscillator is shared on the circuit to calculate the first time difference and the second time difference. The phase detectors 552 and 554 are located to be closer than a predetermined distance from the shared slow oscillator or the shared fast oscillator, to improve the time resolution.

FIG. 22 illustrates a time to digital converter which shares the slow oscillator in which gates which configure three ring oscillators, two phase detectors, and four counters are connected to process the rising edge and the falling edge.

<Correction of flight time>

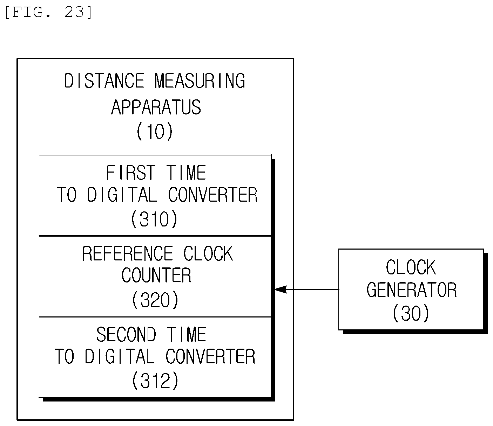

FIG. 23 is a block diagram illustrating a distance measuring apparatus according to another exemplary embodiment of the present disclosure.

A difference of the time delay of each gate may be generated in accordance with a temperature and an applied voltage of the FPGA. The frequency of the ring oscillator is changed due to the temperature and the applied voltage and a minute deviation may be generated in the resolution. The deviation causes an error of the flight time.

In order to monitor and correct the error of the flight time, the distance measuring unit includes a reference clock counter 320 which counts a reference clock received from the external clock generator 30 and counts an internal clock generated in the internal oscillator.

The clock generator 30 may be implemented by a high precision crystal generator. The high precision crystal generator may transmit the generated clock to the reference clock counter 320. When every x-th clock input is received, the reference clock counter 320 stores the number of clocks calculated by the ring oscillator in an internal buffer. The distance measuring apparatus 10 periodically reads the number of stored clocks and corrects the flight time. An algorithm of correcting the flight time is as follows.

```
00: [ ticks_per_x_crystal_clock] = ReferenceClockCounterModule (clock_from_external_crystal)
01: cnt = 0
02: while (positive edge of external clock)
03:    cnt = cnt + 1
04:    if( cnt == x )
05:       ticks_per_x_crystal_clock = cnt
06:        cnt = 0
07:    endif
08: endwhile
```

The distance measuring unit corrects the flight time using a ratio of the number of reference clocks and the number of internal clocks. ticks_per_x_crystal_clock is calculated at real time and is stored in a calibration step which is performed immediately before shipment of the implementation product. The correction of the flight time using the ratio of the number of stored reference clocks and the number of internal clocks is represented by Equation 1.

**[Equation 1]**

$$t_{tof}^{compensated} = \alpha t_{tof}$$

A correction factor $\alpha$ is a value obtained by dividing ticks_per_x_crystal_clock_runtime by ticks_per_x_cryst al_clock_stored_during_calibration_process. Referring to FIG. 23, the distance measuring apparatus 10 includes a plurality of time to digital converters 310 and 312 and the reference clock counter 320 is located between the plurality of time to digital converter 310 and 312. The clock generator 30 which generates the reference clock may be included in the moving object 1. Since the reference clock counter 320 is in contact with the time to digital converter or located within a predetermined distance therefrom, the reference clock counter 320 has almost the same temperature and voltage characteristic as the oscillator used for the time to digital converter. The internal clock also changes in accordance with the temperature and the voltage. According to the exemplary embodiment, the internal clock is not divided so that a high precision may be maintained.

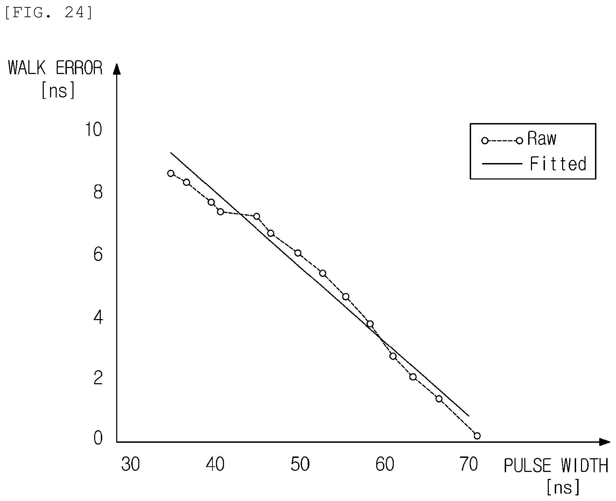

FIG. 24 is a view for explaining an operation of correcting a time by a distance measuring apparatus according to another exemplary embodiment of the present disclosure.

When a differentiation method in which the distance measuring apparatus 10 is implemented by an RC circuit during a process of converting a slope of the signal, a frequency characteristic of the signal in accordance with the distance change is changed to cause a time error. When a constant fraction discriminator is applied during the process of converting the slope of the signal, charging times of the capacitors of the comparator may vary due to the different slopes of the signal and the time error is incurred due to the different response times of the comparator. Therefore, the distance measuring apparatus 10 performs the process of correcting the time error.

The distance measuring unit 300 corrects the flight time using the pulse width of the stop control signal. Generally, since the change in the pulse width of the output signal of the photo diode is severe, it is difficult to use if a pulse width verses a walk error is not close at the time of one to N matching. According to the exemplary embodiment, the process of converting a signal is performed so that the relationship between the pulse width and the walk error may be simply modeled.

The distance measuring unit 300 models a function between the walk error and the pulse width and measures a correction factor in advance. The correction factor in accordance with the pulse width is illustrated in FIG. 14. As illustrated in FIG. 14, the distance measuring unit 300 applies a correction factor which is inverse proportion to the pulse width to correct the flight time. When the pulse width is narrowed due to the weak reflected signal, the walk error is increased so that the distance measuring unit 300 sets the correction factor to be large. When the pulse width is widened due to the strong reflected signal, the walk error is reduced so that the distance measuring unit 300 sets the correction factor to be small.

A relationship equation of the flight time is represented by Equation 2.

**[Equation 2]**

$$t_{tof} = t_{falling} + f_{comp}(t_{pulse})$$

In Equation 2, $t_{tof}$ is a corrected flight time and $t_{falling}$ is a flight time before being corrected. The flight time is a time difference between the stop control signal and the start control signal. The distance measuring apparatus may calculate the time difference based on a rising edge or a falling edge of the start control signal and a rising edge or a falling edge of the stop control signal. $f_{comp}$ is a function of a pulse width verses walk error and $t_{pulse}$ is a pulse width of a signal. The distance measuring apparatus may calculate a pulse width based on the rising edge or the falling edge of the stop control signal.

Even though components included in the moving object and the distance measuring apparatus are separately illustrated in the individual drawings, the plurality of components is coupled to each other to be implemented by at least one module. The components are connected to a communication path which connects a software module or a hardware module in the apparatus to organically operate between the components. The components communicate with each other using one or more communication buses or signal lines.

The moving object and the distance measuring apparatus may be implemented in a logic circuit by hardware, firmware, software, or a combination thereof or may be implemented using a general purpose or special purpose computer. The apparatus may be implemented using hardwired device, field programmable gate ware (FPFA) or application specific integrated circuit (ASIC). Further, the apparatus may be implemented by a system on chip (SoC) including one or more processors and a controller.

The moving object and the distance measuring apparatus may be mounted in a computing device provided with a hardware element as a software, a hardware, or a combination thereof. The computing device may refer to various devices including all or some of a communication device for communicating with various devices and wired/wireless communication networks such as a communication modem, a memory which stores data for executing programs, and a microprocessor which executes programs to perform operations and commands.

In each of the drawings, the respective processes are sequentially performed, but this is merely illustrative and those skilled in the art may apply various modifications and changes by changing the order illustrated in the drawings or performing one or more processes in parallel or adding another process without departing from the essential gist of the exemplary embodiment of the present disclosure.

The operation according to the exemplary embodiment of the present disclosure may be implemented as a program command which may be executed by various computers to be recorded in a computer readable medium. The computer readable medium indicates an arbitrary medium which participates to provide a command to a processor for execution. The computer readable medium may include solely a program command, a data file, and a data structure or a combination thereof. For example, the computer readable medium may include a magnetic medium, an optical recording medium, and a memory. The computer program may be distributed on a networked computer system so that the computer readable code may be stored and executed in a distributed manner. Functional programs, codes, and code segments for implementing the present embodiment may be easily inferred by programmers in the art to which this embodiment belongs.

**Claims**

1. A signal discriminator (200) comprising:

   a first converter (210) which converts a shape of an input signal which rises or falls such that a signal timing having a maximum signal magnitude is zero, wherein the first converter (210) differentiates the input signal or converts the input signal using a constant fraction discriminator, CFD;
   a second converter (220) which adjusts a magnitude of the converted input signal delivered by the first converter (210); and
   a signal detector (230) which detects at least one timing having a predetermined reference magnitude from the input signal with an adjusted magnitude delivered by the second converter (220) to generate an output signal.

2. The signal discriminator (200) according to claim 1, wherein the second converter (220) amplifies a magnitude of the converted input signal N times, wherein N is a real number larger than 1.

3. The signal discriminator according (200) to claim 1, wherein the signal detector (230) outputs a rising edge and a falling edge with respect to one threshold value from the input signal with an adjusted magnitude.

4. A distance measuring apparatus (10), comprising:

   an optical transceiver (100) which emits light to a target by a start control signal and receives light reflected from the target to convert the reflected light into an electrical signal;
   a signal discriminator (200) according to any of the claims 1 to 3, which receives the electrical signal to generate an output signal; and
   a distance measuring unit (300) which calculates a flight time based on a time difference between the start control signal and the output signal to measure a distance.

5. The distance measuring apparatus (10) according to claim 4, wherein the signal detector (230) detects at least one timing having the predetermined reference magnitude from the electrical signal with an adjusted magnitude to generate as the output signal a stop control signal.

6. The distance measuring apparatus (10) according to claim 4, wherein the optical transceiver (100) outputs the electrical signal during a predetermined detecting time and the signal discriminator (200) converts the electrical signal output by the optical transceiver (100).

7. The distance measuring apparatus (10) according to claim 6, wherein the optical transceiver (100) includes:

   a light source (110) which emits light based on a predetermined sampling period;
   a photo diode (140) which receives light reflected from the target to convert the light into an electrical signal; and
   a signal converter (150) which outputs the electrical signal during the detecting time of the sampling period.

8. The distance measuring apparatus (10) according to claim 7, wherein the signal converter (150) includes:

   a resistor having one end connected to the photo diode (140) and the other end connected to the ground;
   a capacitor which is connected at a point where the photo diode (140) and the resistor are connected to output the electrical signal; and
   a switch which is connected to the resistor in parallel to change a transmission path of the electrical signal.

9. The distance measuring apparatus (10) according to claim 8, wherein the switch (i) transmits the electrical signal to a first path during the detecting time of the sampling period and (ii) transmits the electrical signal to a second path during a cut-off time of the sampling period to remove a part of an area where the magnitude of the electrical signal is reduced.

10. The distance measuring apparatus (10) according to claim 8, wherein the distance measuring apparatus (10) adjusts the sampling period and sets the detecting time in accordance with the sampling period to control an on/off operation of the switch.

11. The distance measuring apparatus (10) according to claim 5, wherein the distance measuring unit (300) corrects the flight time using a pulse width of the stop control signal and the distance measuring unit (300) corrects the flight time by applying a correction factor which is inverse proportion to the pulse width.

12. A moving object (1), comprising:

a distance measuring apparatus (10) according to any of the claims 4 to 11, which calculates a flight time between a moving object (1) and a target to measure a distance to the target; and
a moving device (20) which is implemented to move the moving object (1) based on the distance to the target.

**Patentansprüche**

1. Signaldiskriminator (200), aufweisend:

einen ersten Wandler (210), der eine Form eines ansteigenden oder abfallenden Eingangssignals so umwandelt, dass ein Signalzeitpunkt mit einer maximalen Signalamplitude Null ist, wobei der erste Wandler (210) das Eingangssignal differenziert oder das Eingangssignal unter Verwendung eines Konstantbruchdiskriminators (CFD) umwandelt;
einen zweiten Wandler (220), der eine Amplitude des von dem ersten Wandler (210) gelieferten umgewandelten Eingangssignals einstellt; und
einen Signaldetektor (230), der aus dem von dem zweiten Wandler (220) gelieferten Eingangssignal mit eingestellter Amplitude mindestens einen Zeitpunkt mit einer vorbestimmten Referenzamplitude erfasst, um ein Ausgangssignal zu erzeugen.

2. Signaldiskriminator (200) nach Anspruch 1, wobei der zweite Wandler (220) eine Amplitude des umgewandelten Eingangssignals um den Faktor N verstärkt, wobei N eine reelle Zahl größer als 1 ist.

3. Signaldiskriminator (200) nach Anspruch 1, wobei der Signaldetektor (230) aus dem Eingangssignal mit eingestellter Amplitude eine ansteigende Flanke und eine abfallende Flanke in Bezug auf einen Schwellenwert ausgibt.

4. Distanzmessvorrichtung (10), aufweisend:

einen optischen Transceiver (100), der durch ein Startsteuersignal Licht zu einem Ziel aussendet und von dem Ziel reflektiertes Licht empfängt, um das reflektierte Licht in ein elektrisches Signal umzuwandeln;
einen Signaldiskriminator (200) nach einem der Ansprüche 1 bis 3, der das elektrische Signal empfängt, um ein Ausgangssignal zu erzeugen; und
eine Distanzmesseinheit (300), die eine Flugzeit basierend auf einer Zeitdifferenz zwischen dem Startsteuersignal und dem Ausgangssignal berechnet, um eine Distanz zu messen.

5. Distanzmessvorrichtung (10) nach Anspruch 4, wobei der Signaldetektor (230) aus dem elektrischen Signal mit eingestellter Amplitude mindestens einen Zeitpunkt mit der vorbestimmten Referenzamplitude erfasst, um als das Ausgangssignal ein Stoppsteuersignal zu erzeugen.

6. Distanzmessvorrichtung (10) nach Anspruch 4, wobei der optische Transceiver (100) das elektrische Signal während einer vorbestimmten Detektionszeit ausgibt und der Signaldiskriminator (200) das von dem optischen Transceiver (100) ausgegebene elektrische Signal umwandelt.

7. Distanzmessvorrichtung (10) nach Anspruch 6, wobei der optische Transceiver (100) aufweist:

eine Lichtquelle (110), die Licht basierend auf einer vorbestimmten Abtastperiode aussendet;
eine Photodiode (140), die von dem Ziel reflektiertes Licht empfängt, um das Licht in ein elektrisches Signal umzuwandeln; und
einen Signalwandler (150), der das elektrische Signal während der Detektionszeit der Abtastperiode ausgibt.

**8.** Distanzmessvorrichtung (10) nach Anspruch 7, wobei der Signalwandler (150) aufweist:

einen Widerstand mit einem ersten Ende, das mit der Photodiode (140) verbunden ist, und einem zweiten Ende, das mit der Masse verbunden ist;
einen Kondensator, der an einem Punkt verbunden ist, an dem die Photodiode (140) und der Widerstand verbunden sind, um das elektrische Signal auszugeben; und
einen Schalter, der parallel zu dem Widerstand verbunden ist, um einen Übertragungsweg des elektrischen Signals zu ändern.

**9.** Distanzmessvorrichtung (10) nach Anspruch 8, wobei der Schalter (i) das elektrische Signal während der Detektionszeit der Abtastperiode zu einem ersten Pfad überträgt und (ii) das elektrische Signal während einer Sperrzeit der Abtastperiode zu einem zweiten Pfad überträgt, um einen Teil eines Bereichs zu entfernen, in dem die Amplitude des elektrischen Signals reduziert ist.

**10.** Distanzmessvorrichtung (10) nach Anspruch 8, wobei die Distanzmessvorrichtung (10) die Abtastperiode einstellt und die Detektionszeit entsprechend der Abtastperiode festlegt, um einen Ein/Aus-Betrieb des Schalters zu steuern.

**11.** Distanzmessvorrichtung (10) nach Anspruch 5, wobei die Distanzmesseinheit (300) die Flugzeit unter Verwendung einer Pulsbreite des Stoppsteuersignals korrigiert und die Distanzmesseinheit (300) die Flugzeit korrigiert, indem ein Korrekturfaktor angewendet wird, der umgekehrt proportional zu der Pulsbreite ist.

**12.** Sich bewegendes Objekt (1), aufweisend:

eine Distanzmessvorrichtung (10) nach einem der Ansprüche 4 bis 11, die eine Flugzeit zwischen dem sich bewegenden Objekt (1) und einem Ziel berechnet, um eine Distanz zu dem Ziel zu messen; und
eine Bewegungsvorrichtung (20), die dazu eingerichtet ist, das sich bewegende Objekt (1) basierend auf der Distanz zu dem Ziel zu bewegen.


**Revendications**

**1.** Discriminateur de signaux (200) comprenant :

un premier convertisseur (210) qui convertit une forme d'un signal d'entrée qui monte ou descend de sorte qu'une synchronisation de signal ayant une magnitude de signal maximale soit zéro, dans lequel le premier convertisseur (210) différencie le signal d'entrée ou convertir le signal d'entrée à l'aide d'un discriminateur à fraction constante, CFD ;
un deuxième convertisseur (220) qui ajuste une magnitude du signal d'entrée converti délivré par le premier convertisseur (210) ; et
un détecteur de signaux (230) qui détecte au moins une synchronisation ayant une magnitude de référence prédéterminée à partir du signal d'entrée avec une magnitude ajustée, délivré par le deuxième convertisseur (220) pour générer un signal de sortie.

**2.** Discriminateur de signaux (200) selon la revendication 1, dans lequel le deuxième convertisseur (220) amplifie une magnitude du signal d'entrée converti N fois, dans lequel N est un nombre réel supérieur à 1.

**3.** Discriminateur de signaux (200) selon la revendication 1, dans lequel le détecteur de signaux (230) émet en sortie un front montant un front descendant par rapport à une valeur de seuil à partir du signal d'entrée avec une magnitude ajustée.

**4.** Appareil de mesure de distance (10), comprenant :

un émetteur-récepteur optique (100) qui émet de la lumière vers une cible par un signal de commande de démarrage et reçoit de la lumière réfléchie de la cible afin de convertir la lumière réfléchie en un signal électrique ;
un discriminateur de signaux (200) selon une quelconque des revendications 1 à 3, qui reçoit le signal électrique pour générer un signal de sortie : et
une unité de mesure de distance (300) qui calcule une durée de vol sur la base d'une différence temporelle entre le signal de commande de démarrage et le signal de sortie afin de mesurer une distance.

**5.** Appareil de mesure de distance (10) selon la revendication 4, dans lequel le détecteur de signaux (230) détecte au moins une synchronisation ayant la magnitude de référence prédéterminée à partir du signal électrique avec une magnitude ajustée afin de générer comme signal de sortie un signal de commande d'arrêt.

**6.** Appareil de mesure de distance (10) selon la revendication 4, dans lequel l'émetteur-récepteur optique (100) émet en sortie le signal électrique pendant une durée de détection prédéterminée et le discriminateur de signaux (200) convertit le signal électrique émis en sortie par l'émetteur-récepteur optique (100).

**7.** Appareil de mesure de distance (10) selon la revendication 6, dans lequel l'émetteur-récepteur optique (100) comprend :

une source de lumière (110) qui émet de la lumière sur la base d'une période d'échantillonnage prédéterminée, une photodiode (140) qui reçoit la lumière réfléchie par la cible afin de convertir la lumière en un signal électrique et
un convertisseur de signaux (150) qui émet en sortie le signal électrique pendant la durée de détection de la période d'échantillonnage.

**8.** Appareil de mesure de distance (10) selon la revendication 7, dans lequel le convertisseur de signaux (150) comprend :

une résistance dont une extrémité est connectée à la photodiode (140) et l'autre extrémité est connectée à la masse ;
un condensateur qui est connecté à un point où la photodiode (140) et la résistance sont connectées afin d'émettre en sortie le signal électrique ; et
un commutateur qui est connecté à la résistance en parallèle afin de modifier un trajet de transmission du signal électrique.

**9.** Appareil de mesure de distance (10) selon la revendication 8, dans lequel le commutateur (i) transmet le signal électrique à un premier trajet pendant la durée de détection de la période d'échantillonnage et (ii) transmet le signal électrique à un deuxième trajet pendant une durée de coupure de la période d'échantillonnage afin d'éliminer une partie d'une zone où la magnitude du signal électrique est réduite.

**10.** Appareil de mesure de distance (10) selon la revendication 8, dans lequel l'appareil de mesure de distance (10) ajuste la période d'échantillonnage et règle la durée de détection conformément à la période d'échantillonnage afin de commander une opération de marche/arrêt du commutateur.

**11.** Appareil de mesure de distance (10) selon la revendication 5, dans lequel l'unité de mesure de distance (300) corrige la durée de vol en utilisant une largeur d'impulsion du signal de commande d'arrêt et l'unité de mesure de distance (300) corrige la durée de vol en appliquant un facteur de correction qui est proportionnellement inverse à la largeur d'impulsion.

**12.** Objet mobile (1), comprenant
un appareil de mesure de distance (10) selon une quelconque des revendications 4 à 11, qui calcule une durée de vol entre un objet mobile (1) et une cible afin de mesurer une distance par rapport à la cible et un dispositif mobile (20) qui est implémenté afin de déplacer l'objet mobile (1) sur la base de la distance par rapport à la cible.

[FIG. 1]

```
┌─────────────────────────────────────────┐
│            MOVING OBJECT                 │
│                (1)                       │
│   ┌───────────────────────────────────┐ │
│   │ DISTANCE MEASURING APPARATUS      │ │
│   │            (10)                   │ │
│   └───────────────────────────────────┘ │
│                   │                      │
│   ┌───────────────────────────────────┐ │
│   │        MOVING DEVICE              │ │
│   │            (20)                   │ │
│   └───────────────────────────────────┘ │
└─────────────────────────────────────────┘
```

[FIG. 2]

[FIG. 3]

[FIG. 4]

[FIG. 5]

[FIG. 6]

[FIG. 7]

```
                OPTICAL TRANSCEIVER
                     (100)
     ┌────────────────┐    ┌────────────────┐
  →  │  LIGHT SOURCE  │ →  │  TRANSMISSION  │ ──┐
     │     (110)      │    │  OPTICAL UNIT  │   │
     └────────────────┘    │     (120)      │   │
                           └────────────────┘   ├─ ▌
     ┌────────────────┐    ┌────────────────┐   │
  ←  │  PHOTO DIODE   │ ←  │   RECEPTION    │ ←─┘
     │     (140)      │    │  OPTICAL UNIT  │
     └────────────────┘    │     (130)      │
                           └────────────────┘
```

[FIG. 8]

```
         OPTICAL TRANSCEIVER
              (100)
     ┌────────────────────────┐
     │      LIGHT SOURCE      │
     │        (110)           │
     └────────────────────────┘

     ┌────────────────────────┐
     │      PHOTO DIODE       │
     │        (140)           │
     └────────────────────────┘
                │
     ┌────────────────────────┐
     │   SIGNAL CONVERTER     │
     │        (150)           │
     └────────────────────────┘
```

[FIG. 9]

[FIG. 10]

[FIG. 11]

SIGNAL
MAGNITUDE

Threshold

TIME

$T_1$    $T_2$

[FIG. 12]

SIGNAL DISCRIMINATOR
(200)

FIRST CONVERTER
(210)

SECOND CONVERTER
(220)

SIGNAL DETECTOR
(230)

[FIG. 13]

[FIG. 14]

[FIG. 15]

SIGNAL MAGNITUDE

Threshold

TIME

$T_{front}$

$T_{rising2}$

$T_{rising1}$

$T_{falling2}$

$T_{falling1}$

$T_{end}$

[FIG. 16]

[FIG. 17]

[FIG. 18]

[FIG. 19]

[FIG. 20]

[FIG. 21]

[FIG. 22]

[FIG. 23]

DISTANCE MEASURING
APPARATUS
(10)

FIRST TIME
TO DIGITAL CONVERTER
(310)

REFERENCE CLOCK
COUNTER
(320)

SECOND TIME
TO DIGITAL CONVERTER
(312)

CLOCK
GENERATOR
(30)

[FIG. 24]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101856208 A
- US 20140111812 A1